(19) Europäisches Patentamt
European Patent Office
Office européen des brevets

(11) **EP 2 560 275 A1**

(12) **EUROPEAN PATENT APPLICATION**
published in accordance with Art. 153(4) EPC

(43) Date of publication:
**20.02.2013 Bulletin 2013/08**

(51) Int Cl.:
**H02M 7/483** *(2007.01)*        **H02M 7/48** *(2007.01)*

(21) Application number: **11768743.4**

(86) International application number:
**PCT/JP2011/058566**

(22) Date of filing: **05.04.2011**

(87) International publication number:
**WO 2011/129222 (20.10.2011 Gazette 2011/42)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.04.2010   JP 2010091050**

(71) Applicant: **Hitachi, Ltd.**
**Chiyoda-ku**
**Tokyo 100-8280 (JP)**

(72) Inventors:
• **INOUE, Shigenori**
**Hitachi-shi**
**Ibaraki 319-1292 (JP)**
• **KATOH, Shuji**
**Hitachi-shi**
**Ibaraki 319-1292 (JP)**

(74) Representative: **Strehl Schübel-Hopf & Partner**
**Maximilianstraße 54**
**D-80538 München (DE)**

(54) **POWER CONVERTER**

(57)     In relation to a three-phase power converter that is formed with three clusters, each of which includes one or a plurality of unit cells, a conventional three-phase power converter needs to be designed so that the DC capacitor included in the unit cell withstands a high voltage, making the DC capacitor large. This present invention addresses this problem.

In a power converter that has a star-connected cascade multi-level converter (CMC) linked to a power supply system, the CMC being formed by star-connecting serial bodies, each of which is formed with a reactor and a cluster, the cluster being a serial body formed with one or a plurality of unit cells, when the power supply system causes an instantaneous voltage drop, a zero-phase voltage output by the cluster is made substantially constant from a half cycle after the occurrence of the instantaneous voltage drop until the instantaneous voltage drop ends.

*FIG. 1*

## EP 2 560 275 A1

**Description**

FIELD OF THE INVENTION

The present invention relates to a power converter, and more particularly to a three-phase power converter that is formed with three clusters, each of which is a serial body including one or a plurality of unit cells.

BACKGROUND OF THE INVENTION

A cascade multi-level converter (CMC) is a circuit system that can output voltages equal to or higher than the withstand voltages of switching elements used therein; the switching elements are, for example, insulated gate bipolar transistors (IGBTs) or other switching elements that can be turned on and off in a controlled manner. According to NPL 1, the CMC is formed by star-connecting three serial bodies, each of which is formed with a reactor and a cluster, the cluster being a serial body formed with a plurality of unit cells.

According to NON-PATENT LITERATURE (NPL) 1, each unit cell is a single-phase full bridge circuit; it has a plurality of switching elements and a DC capacitor. The unit cell turns on and off the relevant switching element in a controlled manner to output a voltage across the DC capacitor (referred to below as the DC voltage), a voltage with a polarity opposite to the polarity of the DC voltage, or a zero-voltage.

Since each cluster is a serial body having one or a plurality of unit cells, the output voltage of the cluster (referred to below as the cluster voltage) is the output voltage of the one unit cell included in the cluster or the sum of the output voltages of the plurality of unit cells therein. When each cluster includes a plurality of unit cells, if the switching timing of each unit cell in the cluster is appropriately shifted, the cluster voltage can have a multi-level waveform. Accordingly, the harmonic component of the cluster voltage can be reduced by increasing the number of unit cells included in each cluster.

NPL 1 indicates experimental results of a CMC-based static var compensator (referred to below as the CMC-STATCOM) that has a CMC linked to a power supply system. NPL 1 also discloses that even if an instantaneous voltage drop is caused in the power supply system, the operation of the CMC-STATCOM can be continued.

PRIOR TECHNICAL LITERATURE

NON-PATENT LITERATURE (NPL)

NPL 1: Yoshii, Inoue, Akagi "Transuresu kasukedo PWM STATCOM no chokuryudenatsuseigyoho no kento (Zero-sequence voltage control of a cascade PWM converter with star-configuration)" IEE-SPC and IEE-IEA materials, SPC-07-115/IEA-07-38, pp. 32-36

SUMMARY OF THE INVENTION

{Technical Problem}

NPL 1 discloses DC voltage balancing control by which the DC voltages of a plurality of unit cells included in the CMC are balanced (simply referred to below as balancing control).

Balancing control is classified into cluster balancing control and inter-stage balancing control.

Cluster balancing control is control by which the average of the DC voltages of the unit cells included in each cluster (referred to below as the cluster average DC voltage) is made to match the average of the DC voltages of all unit cells (referred to below as the total average DC voltage).

In cluster balancing control, a zero-phase voltage command value calculated from a difference between the total average DC voltage and the cluster average DC voltage is superimposed on a cluster voltage command value to be supplied to each cluster to adjust active electric power that flows into the cluster. Thus, feedback control is performed so that the difference between the total average DC voltage and the cluster average DC voltage becomes zero.

In inter-stage balancing control, the DC voltages of a plurality of unit cells in one cluster are balanced.

According to NPL 1, even if an instantaneous voltage drop is caused in the power supply system, the operation of the CMC-STATCOM can be continued, as described above. Even when the balancing control described above is carried out, however, the cluster average DC voltage becomes unbalanced at the occurrence of an instantaneous voltage drop. That is, the DC voltage is increased or decreased from the rated value.

Accordingly, the CMC disclosed in NPL 1 needs to be designed so that DC capacitors withstand a high voltage against a DC voltage rise at the occurrence of an instantaneous voltage drop, resulting in large DC voltage capacitors.

2

{Solution to Problem}

First, the reason why the CMC-STATCOM described in NPL 1 causes a cluster average DC voltage imbalance at the occurrence of an instantaneous voltage drop will be described below. A solution to prevent the cluster average DC voltage imbalance will then be described.

Voltage in the power supply system (simply referred to below as the power supply system voltage) at the occurrence of an instantaneous voltage drop includes a negative-phase sequence component. While an instantaneous voltage drop continues, each cluster outputs a negative-phase sequence voltage that is nearly equal to the negative-phase sequence component included in the power supply system voltage to prevent negative-phase sequence current from flowing.

Since negative-phase sequence voltage output from each cluster and positive-phase sequence reactive current flowing in the cluster generate unbalanced electric power, active electric power that flows into the cluster becomes unbalanced. As a result, the cluster average DC voltage becomes unbalanced.

In cluster balancing control in NPL 1, after an imbalance of the cluster average DC voltage has been detected, a zero-phase voltage command value that balances the cluster average DC voltage is calculated. Since a low-pass filter (LPF) is used during the detection of the DC voltage of each unit cell, however, the response speed in balancing control is substantially determined by the LPF. Therefore, phenomena in several tens of milliseconds to hundreds of milliseconds cannot be followed. This makes it impossible to prevent a rise or drop of the DC voltage.

In the CMC, in which a unit cell is a single-phase converter, the DC voltage varies at twice the frequency of the power supply system. To eliminate this variation in the detection and control of the DC voltage, the LPF is indispensable.

To address the above problem, the present invention provides a solution described below.

In a power converter that has a star-connected cascade multi-level converter (CMC) linked to a power supply system, the CMC being formed by star-connecting serial bodies, each of which is formed with a reactor and a cluster, the cluster being a serial body formed with one or a plurality of unit cells, the present invention provides a power converter characterized in that a potential at a point at which three serial bodies, each having the reactor and the cluster, are star-connected is controlled so that the potential varies at the same amplitude as the amplitude of the negative-phase sequence voltage of the power supply system.

In a power converter that has a star-connected cascade multi-level converter (CMC) linked to a power supply system, the CMC being formed by star-connecting serial bodies, each of which is formed with a reactor and a cluster, the cluster being a serial body formed with one or a plurality of unit cells, the present invention provides a power converter characterized in that when the power supply system causes an instantaneous voltage drop, an amplitude by which the potential at the point at which the three serial bodies are star-connected varies is made substantially constant from a half cycle after the occurrence of the instantaneous voltage drop until the instantaneous voltage drop ends.

In a power converter that has a star-connected cascade multi-level converter (CMC) linked to a power supply system, the CMC being formed by star-connecting serial bodies, each of which is formed with a reactor and a cluster, the cluster being a serial body formed with one or a plurality of unit cells, the present invention also provides a power converter characterized in that if the root-mean-square value and phase angle of the negative-phase sequence component included in a voltage of the power supply system are respectively denoted V2 and $\phi2$ and the phase angle of the positive-phase sequence component of a current that flows into the reactor is denoted $\delta1$ a zero-phase voltage having root-mean-square value V0 and phase angle $\phi0$, which are substantially represented by the equations below, is added to an output voltage command value to be supplied to each cluster.

$$\{Eq. \ 1\}$$

$$V0 \ = \ V2$$

$$\{Eq. \ 2\}$$

$$\phi0 \ = \ 2 \ \times \ \delta1 \ - \ \phi2 \ \pm \ \pi$$

The present invention also provides a power converter characterized in that moving average calculation in which a half cycle of the frequency of the power supply system or its integer multiple is handled as a time window is used in the detection of root-mean-square value V2 and phase angle $\phi2$ of the negative-phase sequence component included in the voltage of the power supply system and in the detection of phase angle $\delta1$ of the positive-phase sequence current of the reactor.

In a power converter that has a star-connected cascade multi-level converter (CMC) linked to a power supply system, the CMC being formed by star-connecting serial bodies, each of which is formed with a reactor and a cluster, the cluster being a serial body formed with one or a plurality of unit cells, the present invention also provides a power converter characterized in that when the power supply system causes an instantaneous voltage drop while the power converter is outputting a negative-phase sequence current, a zero-phase voltage output by the cluster is made substantially constant from a half cycle after the occurrence of the instantaneous voltage drop until the instantaneous voltage drop ends.

In a power converter that has a star-connected cascade multi-level converter (CMC) linked to a power supply system, the CMC being formed by star-connecting serial bodies, each of which is formed with a reactor and a cluster, the cluster being a serial body formed with one or a plurality of unit cells, the present invention also provides a power converter characterized in that if the root-mean-square value and phase angle of the positive-phase sequence component included in the voltage of the power supply system are respectively denoted V1 and $\phi$1, the root-mean-square value and phase angle of the negative-phase sequence component included in the voltage of the power supply system are respectively denoted V2 and $\phi$2, the root-mean-square value and phase angle of the positive-phase sequence component of a current that flows into the reactor are respectively denoted I1 and $\delta$1, and the root-mean-square value and phase angle of the negative-phase sequence component of the current that flows into the reactor are respectively denoted I2 and $\delta$2, a zero-phase voltage having root-mean-square value V0 and phase angle $\phi$0, which are substantially represented by the equations below, is added to an output voltage command value to be supplied to each cluster.

{Eq. 3}

$$V0 = -(V1 \times I2 \times \cos(\phi1 - \delta2) + V2 \times I1 \times \cos(\phi2 - \delta1))/(I1 \times \cos(\phi0 - \delta1) + I2 \times \cos(\phi0 - \delta2))$$

{Eq. 4}

$$\phi0 = \tan^{-1}((V1 \times I2 \times (I1 \times \sin(\phi1 + \delta1 - \delta2) + I2 \times \sin(\phi1 - 2 \times \delta2)) - V2 \times I1 \times (I2 \times \sin(\phi2 - \delta2 + \delta1) + I1 \times \sin(\phi2 - 2 \times \delta1)))/(V1 \times I2 \times (I1 \times \cos(\phi1 + \delta1 - \delta2) - I2 \times \cos(\phi1 - 2 \times \delta2)) - V2 \times I1 \times (I2 \times \cos(\phi2 - \delta2 + \delta1) - I1 \times \cos(\phi2 - 2 \times \delta1))))$$

The present invention also provides a power converter characterized in that moving average calculation in which a half cycle of the frequency of the power supply system or its integer multiple is handled as a time window is used in the detection of root-mean-square value V1 and phase angle $\phi$1 of the positive-phase sequence component included in the voltage of the power supply system, in the detection of root-mean-square value V2 and phase angle $\phi$2 of the negative-phase sequence component included in the voltage of the power supply system, in the detection of root-mean-square value I1 and phase angle $\delta$1 of the positive-phase sequence component of the current that flows into the reactor, and in the detection of root-mean-square value I2 and phase angle $\delta$2 of the negative-phase sequence component of the current that flows into the reactor.

{Advantageous Effects of Invention}

According to the present invention, even if a negative-phase sequence component is included in the voltage of a power supply system as in a case in which an instantaneous voltage drop is caused, it is possible to make active power that flows into each cluster, which is part of the CMC-STATCOM, approximately zero. Thus, the imbalance of the DC voltage of each unit cell included in each cluster can be suppressed and thereby a rise of the DC voltage can be prevented. This enables the withstand DC voltage to be designed at a low level and DC capacitors to be made compact.

According to the present invention, even if both an positive-phase sequence current and a negative-phase sequence current are flowing in the reactor, reactive electric power that flows into each cluster of the CMC-STATCOM can be made approximately zero from a half cycle after the occurrence of an instantaneous voltage drop until the instantaneous voltage drop ends. Thus, the imbalance of the DC voltage of each unit cell included in each cluster can be suppressed and thereby a rise of the DC voltage can be prevented. This enables the withstand DC voltage to be designed at a low level and DC capacitors to be made compact.

BRIEF DESCRIPTION OF THE DRAWINGS

FIG. 1 shows a main circuit diagram of a star-connected CMC-STATCOM.
FIG. 2 shows a unit cell of full bridge type.
FIG. 3 is a control block diagram.
FIG. 4 shows a feed-forward calculator.
FIG. 5 shows examples of waveforms in the prior art.
FIG. 6 shows examples of waveforms in the present invention.
FIG. 7 shows a negative-phase sequence current ready feed-forward calculator.
FIG. 8 shows a control block of negative-phase sequence current output type.
FIG. 9 shows a negative-phase sequence current output feed-forward calculator.
FIG. 10 shows a feed-forward calculator cluster balancing controller.

DESCRIPTION OF THE PREFERRED EMBODIMENTS

DESCRIPTION OF THE PREFERRED EMBODIMENTS

Embodiments of the present invention will be described below with reference to the drawings.

{Embodiment 1}

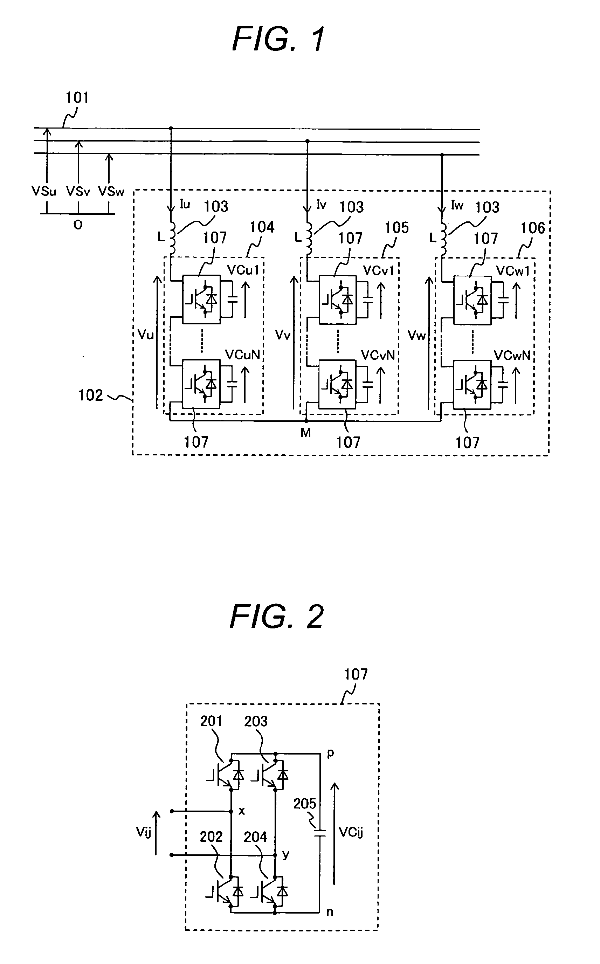

A first embodiment of the present invention will be described below.
In the first embodiment, a DC capacitor in each unit cell is made compact when compared with the CMC-STATCOM in the prior art.
A whole structure in the first embodiment will be described below with reference to FIG. 1.
A power converter 102 connected to a power supply system 101 includes three reactors 103, a u-phase cluster 104, a v-phase cluster 105, and a w-phase cluster 106. In this description, the u-, v-, and w-phase clusters 104 to 106 may not be distinguished but may be simply referred to as clusters.
One reactor 103 is connected in series with each of the clusters 104 to 106. One end of each serial body formed with one of the clusters 104 to 106 and the reactor 103 is connected to the power supply system 101. The other ends of the serial bodies are star-connected at a point M.
Each of the clusters 104 to 106 is a serial body formed with one or a plurality of unit cells 107. In FIG. 1, N unit cells are connected in each cell. In the clusters 104 to 106, the unit cells are called a first cell, a second cell, and so on, starting from the unit cell closest to the reactor 103. The unit cell connected to the point M is an N-th cell. The internal structure of the unit cell 107 will be described later.
Voltages and currents will be defined below.
Phase voltages of the power supply system 101 are denoted VSu, VSv, and Vsw. A point O is a virtual neutral point at which the sum of VSu, VSv, and Vsw becomes 0.
Currents that flow into the reactor 103 are denoted Iu, Iv, and Iw.
Output voltages (cluster voltages) from the clusters 104 to 106 are denoted Vu, Vv, and Vw.
Furthermore, a DC voltage of the unit cell included in each of the clusters 104 to 106 is denoted VCij (i = u, v, w). If N unit cells 107 are included in each cluster, j is 1, 2, ..., or N.
The internal structure of the unit cell 107 will be described below with reference to FIG. 2. FIG. 2 shows i-phase cell j (i = u, v, w, j = 1, 2, ..., N).
The unit cell 107 is a single-phase fill bridge circuit including an x-phase upper element 201, an x-phase lower element 202, a y-phase upper element 203, a y-phase lower element 204, and a DC capacitor 205. The unit cell 107 controls the switching of the elements 201 to 204 to output voltage Vij at a point x, relative to a point y, that is set to 0, VCij, or -VCij.
In FIG. 2, the elements 201 to 204 are each represented with a symbol of an IGBT. However, they may be gate turn-off thyristors (GTOs), gate-commutated turn-off thyristors (GCTs), metal-oxide-semiconductor field-effect transistors (MOSFETs), or other types of switching elements that can be tuned on and off in a controlled manner, instead of IGBTs.

Each of the clusters 104 to 106 shown in FIG. 1 is a serial body including N unit cells 107, as described above. Therefore, each of cluster voltages Vu, Vv, and Vw is the sum of output voltage Vij of N unit cells 107. These voltages can be represented as Vu = Vu1 + Vu2 + ... + VuN, Vv = Vv1 + Vv2 + ... + VvN, and Vw = Vw1 + Vw2 + ... + VwN.

When the unit cells undergo pulse-width modulation (PWM) control, therefore, the cluster voltages Vu, Vv, and Vw can be controlled.

Unless otherwise noted, this description will explain the principle and effects of the present invention, focusing on fundamental wave components included in clusters voltages Vu, Vv, and Vw and currents Iu, Iv, and Iw that flow into the reactor 103.

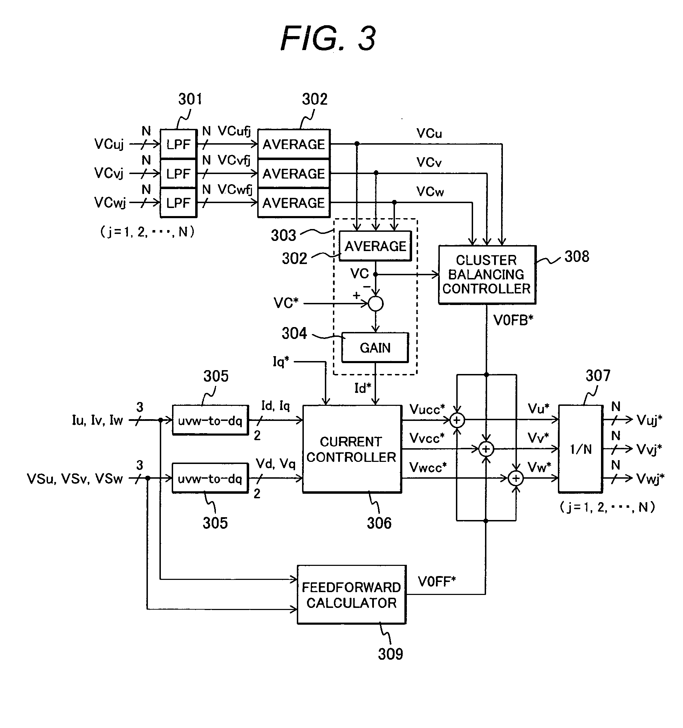

The method of controlling the power converter in the present invention and the principle of the present invention will be described with reference to FIG. 3. FIG. 3 is a block diagram that presents calculation in a controller not shown in FIG. 1.

The present invention is characterized in that the controller has a feed-forward calculator 309 and that a zero-phase feed-forward term V0FF* calculated by the feed-forward calculator 309 is superimposed on cluster voltage command values Vu*, Vv*, and Vw*. The prior art typified by NPL 1 lacks a calculator equivalent to the feed-forward calculator 309. In control calculation in the prior art, therefore, only a zero-phase feedback term V0FB* calculated by a cluster balancing controller 308 is superimposed on cluster voltage command values Vu*, Vv*, and Vw*.

First, calculation common to the present invention and NPL 1 will be described.

The controller detects phase voltages VSu, VSv, VSw of the power supply system 101 and performs positive-phase sequence dq conversion on these voltages to obtain positive-phase sequence d-axis voltage Vd and positive-phase sequence q-axis voltage Vq. The controller also detects Iu, Iv, Iw that flow into the reactors and performs positive-phase sequence dq conversion on these currents to obtain positive-phase sequence d-axis current Id and positive-phase sequence q-axis current Iq. Obtained Vd, Vq, Id, and Iq are given to a current controller 306.

The current controller 306 calculates cluster voltage command values Vucc*, Vvcc*, and Vwcc* to be output from the current controller so that currents Id and Iq match their corresponding command values Id* and Iq*. Positive-phase sequence d-axis current command value Id* is given by a total average DC voltage controller 303. Positive-phase sequence q-axis current command value is given by a high-order control system (not shown) or the like.

The controller detects DC voltages VCuj, VCvj, and VCwj of the unit cells 107, passes these voltages through low-pass filters (LPFs) 301, and obtain VCufj, VCfvj, and VCwfj (j = 1, 2, ..., N).

An average calculator 302 calculates average DC voltages VCu, VCv, and VCw in the clusters (cluster average DC voltages) according to the equations below.

{Eq. 5}

$$VCu = (VCuf1 + VCuf2 + … + VCufN)/N$$

$$VCv = (VCvf1 + VCvf2 + … + VCvfN)/N$$

$$VCw = (VCwf1 + VCwf2 + … + VCwfN)/N$$

The total average DC voltage controller 303 calculates the average (total average DC voltage) VC of VCu, VCv, and VCw (VC = (VCu + VCv + VCw)/3), multiplies error between command value VC* and VC by a total average DC voltage control gain 304 to calculate positive-phase sequence d-axis current command value Id*, and gives calculated Id* to the current controller 306.

The cluster balancing controller 308 calculates the zero-phase feedback term V0FB*, which is used in cluster balancing control, from cluster average DC voltages VCu, VCv, and VCw and total average DC voltage VC, and adds the calculated V0FB* to Vucc*, Vvcc*, and Vwcc* to obtain cluster voltage command values Vu*, Vv*, and Vw*.

A voltage command value divider 307 divides cluster voltage command values Vu*, Vv*, and Vw* by the number N of unit cells and distributes output voltage command value Vij* (i = u, v, w, j = 1, 2, ..., N) to the unit cells 107.

Next, the feed-forward calculator 309, which is a feature of the present invention, will be described.

The feed-forward calculator 309 calculates the zero-phase feed-forward term V0FF* from phase voltages VSu, VSv, and VSw of the power supply system and from currents Iu, Iv, and Iw that flow into the reactors 103, and adds calculated V0FF* to Vucc*, Vvcc*, and Vwcc*.

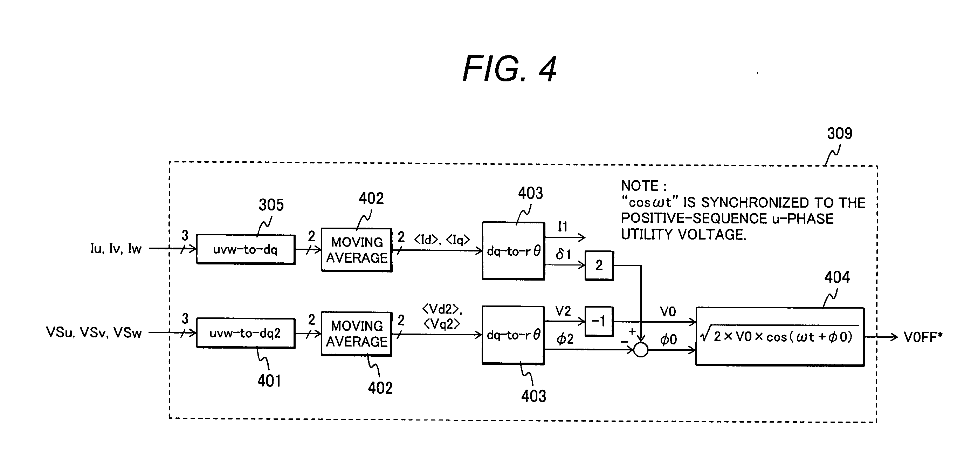

The internal structure of the feed-forward calculator 309 will be described below with reference to FIG. 4.

The feed-forward calculator 309 uses an positive-phase sequence dq converting block 305 to perform positive-phase sequence dq conversion on currents Iu, Iv, and Iw that flow into the reactors 103, and calculates a moving average through a moving average calculator 402, in which a half cycle of the power supply system is handled as a time window, obtaining positive-phase sequence d-axis current <Id> and positive-phase sequence q-axis current <Iq>. The feed-forward calculator 309 also obtains positive-phase sequence current root-mean-square value I1 and positive-phase sequence current phase angle $\delta 1$ from the sizes and amplitudes of vectors [<Id>, <Iq>] through an orthogonal coordinate-polar coordinate converting block 403.

The feed-forward calculator 309 also uses a negative-phase sequence dq converting block 401 to perform negative-phase sequence dq conversion on phase voltages VSu, VSv, and VSw of the power supply system 101, and calculates a moving average through the moving average calculator 402, in which a half cycle of the power supply system is handled as a time window, obtaining negative-phase sequence d-axis voltage <Vd2> and negative-phase sequence q-axis current <Vq2>. The feed-forward calculator 309 also obtains negative-phase sequence voltage root-mean-square value V2 and negative-phase sequence voltage phase angle $\phi 2$ from the sizes and amplitudes of vectors [<Vd2>, <Vq2>] through the orthogonal coordinate-polar coordinate converting block 403.

The inventors found from I1, $\delta 1$, V2, and $\phi 2$ that active electric power that flows into the clusters 104 to 106 can be made zero by superimposing the zero-phase feed-forward term V0FF*, which has root-mean-square value V0 and phase angle $\phi 0$ represented by the equations below, on cluster voltage command values Vu*, Vv*, and Vw*. The mechanism of the present invention will be described later.

$$\{\text{Eq. 6}\}$$

$$V0 = -V2$$

$$\{\text{Eq. 7}\}$$

$$\phi 0 = 2 \times \delta 1 - \phi 2$$

A sine wave generator 404 generates the zero-phase feed-forward term V0FF* as a sine wave signal having root-mean-square value V0 and phase angle $\phi 0$. The obtained V0FF* is superimposed on cluster voltage command values Vu*, Vv*, and Vw*.

When each cluster is controlled as described above, the potential at the point M in FIG. 1 varies with an amplitude that is almost the same as the amplitude of the negative-phase sequence component included in the power supply system 101.

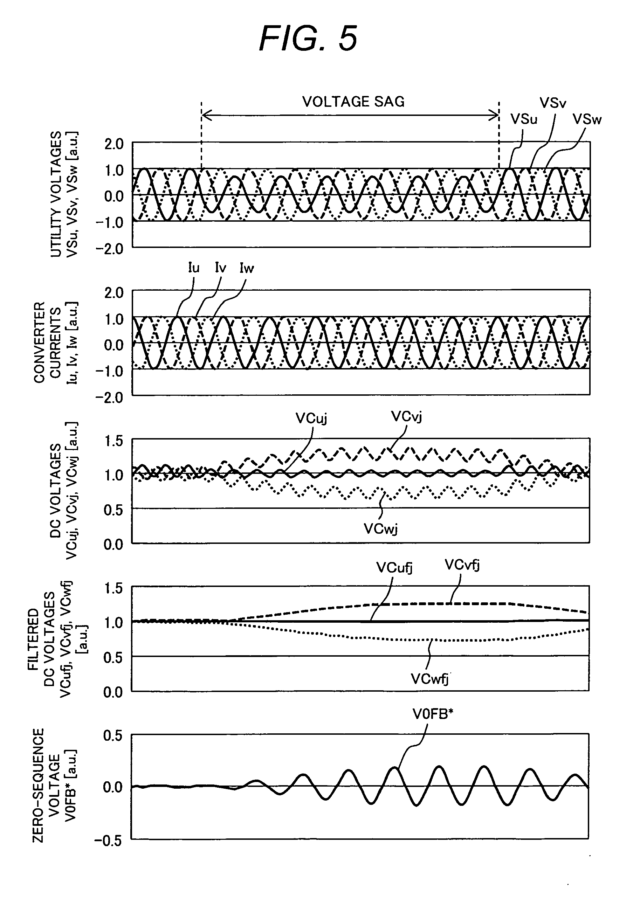

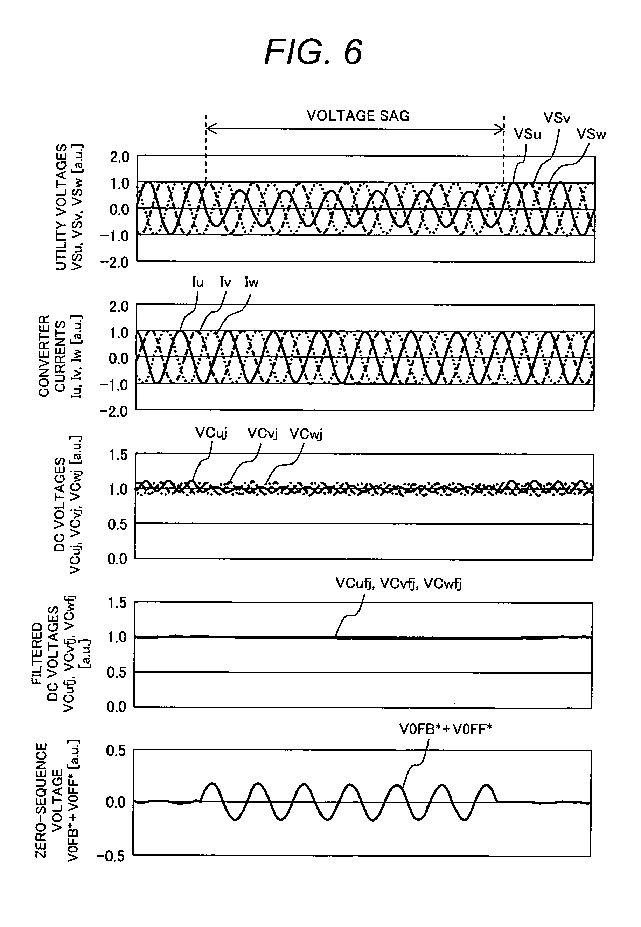

Effects obtained by the present invention will be described with reference to FIGs. 5 and 6.

FIG. 5 shows schematic waveforms in individual members in a case in which the prior art has been used. The waveforms at the top are schematic waveforms of phase voltages VSu, VSv, and VSw of the power supply system 101, followed by schematic waveforms of currents Iu, Iv, and Iw that flow into the reactors 103, schematic waveforms of DC voltages VCuj, VCvj, and VCwj, schematic waveforms of DC voltages VCufj, VCvfj, and VCwfj observed after they have passed through the LPFs 301, and a schematic waveform of the zero-phase feedback term V0FB* (j = 1, 2, ..., N) in that order.

In FIG. 5, the horizontal axis indicates time or phase angle, and the vertical axis indicates amplitudes of voltage and current in an arbitrary unit (a.u.).

The prior art lacks the feed-forward calculator 309 shown in FIG. 3.

FIG. 5 shows a case in which a 50% instantaneous voltage drop has been generated positive-phase sequence u. While the instantaneous voltage drop continues, VSu, VSv, and VSw include both a positive-phase sequence component and a negative-phase sequence component.

To prevent negative-phase sequence currents from flowing, the clusters 104 to 106 output negative-phase sequence voltages having almost the same amplitude and phase angle as the negative-phase sequence components of VSu, VSv, and VSw. That is, cluster voltages Vu, Vv, and Vw include negative-phase sequence components.

Since the negative-phase sequence components included in Vu, Vv and Vw and Iu, Iv and Iw including only the positive-phase sequence components form unbalanced electric power, active electric power that flows into each cluster and active electric power output from the cluster are unbalanced. As shown in FIG. 5, therefore, DC voltages VCuj, VCvj, and VCwj are unbalanced.

The cluster balancing controller 308 calculates the zero-phase feedback term V0FB* so that VCufj, VCvfj, and VCwfj, which are DC voltages that have passed through the LPFs 301, are balanced. As VCufj, VCvfj, and VCwfj are more unbalanced, therefore, the amplitude of V0FB* is also increased.

The amplitude of V0FB* converges to a fixed value only after the imbalance among VCuj, VCvj, and VCwj has reached a certain value. At that time, active electric power that flows into each cluster becomes zero.

In FIG. 3, DC voltages VCuj, VCvj, and VCwj are detected after they have passed through the LPFs 301, so the response characteristic of the cluster balancing controller is substantially determined by the LPF 301. Furthermore, since each unit cell 107 is a single-phase full bridge and variations that are caused in DC voltages with a frequency twice the frequency of the power supply system are removed in control and calculation, the LPF 301 is indispensable. In the prior art, therefore, it has been impossible to prevent VCuj, VCvj, and VCwj from being unbalanced.

FIG. 6 shows schematic waveforms in individual members in a case in which control in the present invention has been carried out. The waveforms at the top are schematic waveforms of phase voltages VSu, VSv, and VSw of the power supply system 101, followed by schematic waveforms of currents Iu, Iv, and Iw that flow into the reactors 103, schematic waveforms of DC voltages VCuj, VCvj, and VCwj, schematic waveforms of DC voltages VCufj, VCvfj, and VCwfj observed after they have passed through the LPFs 301, and a schematic waveform obtained as the sum of the zero-phase feedback term V0FB* and the zero-phase feed-forward term V0FF* (V0FB* + V0FF*) in that order.

In FIG. 6, the horizontal axis indicates time or phase angle, and the vertical axis indicates amplitudes of voltage and current in an arbitrary unit (a.u.).

Unlike the prior art in FIG. 5, the amplitude of the sum of V0FB* and V0FF* shown at the bottom in FIG. 6 has become substantially constant immediately after the occurrence of the instantaneous voltage drop. It is found that due to this, DC voltages Vcu, Vcv, and Vcw shown as the third graph from the top in FIG. 6 also caused almost no change before and after the instantaneous voltage drop.

The mechanism of the present invention will be described below.

When the zero-phase feed-forward term V0FF* obtained by the feed-forward calculator 309 in FIG. 3 is superimposed on cluster voltage command values Vu*, Vv*, and Vw*, a phase difference between Vu and Iu, a phase difference between Vv and Iv, and a phase difference between Vw and Iw all become approximately 90 degrees, starting immediately after the occurrence of an instantaneous voltage drop. That is, active electric power that flows into each cluster and active electric power output from the cluster become 0.

Since active electric power that flows into each cluster and active electric power output from the cluster become 0, it becomes possible to suppress the DC voltages from being unbalanced.

In the above description, a case has been described in which the negative-phase sequence component of the system voltage is known immediately after the occurrence of the instantaneous voltage drop. If, for example, a time equivalent to a half cycle of the power supply system is required in the detection of the negative-phase sequence component of the power supply system, however, V0FF* becomes substantially fixed from a half cycle after the occurrence of the instantaneous voltage drop until the instantaneous voltage drop ends.

In the present invention, the zero-phase feedback term V0FB* plays a role of suppressing the DC voltages from being unbalanced due to variations in the characteristics of parts in use and other factors.

With the power converter 102 in this embodiment, the clusters 104 to 106 are connected to the power supply system 101 through their respective reactors 103.

The present invention can also be applied to a case in which the clusters 104 to 106 are each connected to the power supply system 101 through a transform instead of the reactor 103.

The present invention can also be applied to a case in which the clusters 104 to 106 are each connected to the power supply system 101 through both the rector 103 and a transform.

{Embodiment 2}

A second embodiment of the present invention will be described below.

In the second embodiment, the DC capacitor in each unit cell is made compact when compared with the CMC-STATCOM in the prior art, as in the first embodiment.

In the second embodiment, even if an instantaneous voltage drop occurs in the power supply system 101 in a state in which currents Iu, Iv, and Iw flowing in the reactors 103 include negative-phase sequence components, it is possible to prevent the DC voltage from being unbalanced.

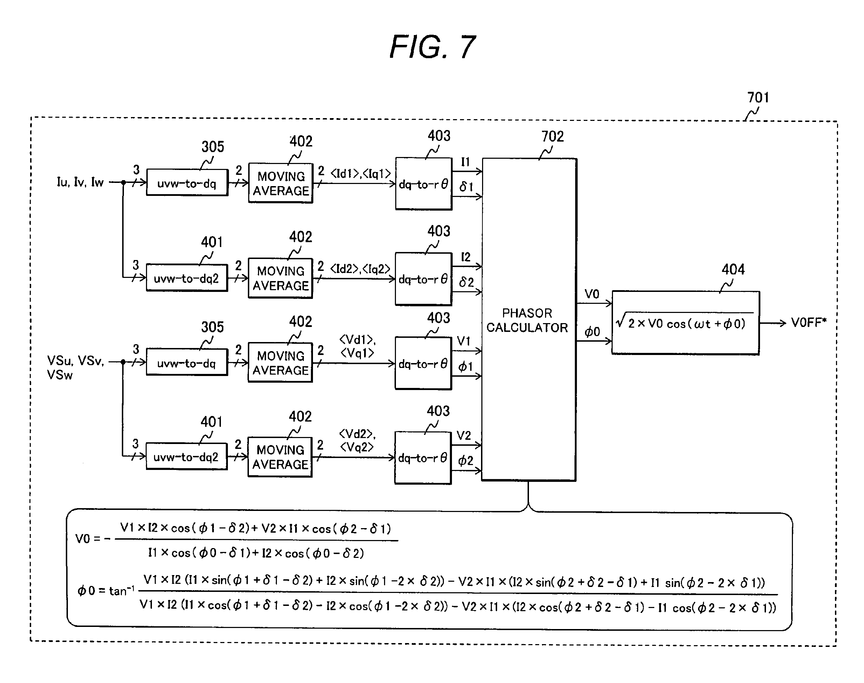

In the second embodiment, the feed-forward calculator 309 in the first embodiment is replaced with a negative-phase sequence current ready feed-forward calculator 701 shown in FIG. 7. The negative-phase sequence current ready feed-forward calculator 701, which is a difference between the first embodiment and the second embodiment will be described below with reference to FIG. 7.

The negative-phase sequence current ready feed-forward calculator 701 obtains positive-phase sequence d-axis current <Id1> and positive-phase sequence q-axis current <Iq1> from currents Iu, Iv, and Iw through the positive-phase sequence dq converting block 305 and moving average calculator 402. The negative-phase sequence current ready feed-forward calculator 701 also obtains positive-phase sequence current root-mean-square value I1 and positive-phase sequence current phase angle $\delta 1$ from the sizes and amplitudes of vectors [<Id1>, <Iq1>] through the orthogonal coordinate-polar coordinate converting block 403.

The negative-phase sequence current ready feed-forward calculator 701 obtains negative-phase sequence d-axis current <Id2> and negative-phase sequence q-axis current <Iq2> from currents Iu, Iv, and Iw through the negative-phase sequence dq converting block 401 and moving average calculator 402. The negative-phase sequence current ready feed-forward calculator 701 also obtains negative-phase sequence current root-mean-square value I2 and negative-phase sequence current phase angle $\delta 2$ from the sizes and amplitudes of vectors [<Id2>, <Iq2>] through the orthogonal coordinate-polar coordinate converting block 403.

The negative-phase sequence current ready feed-forward calculator 701 obtains positive-phase sequence d-axis voltage <Vd1> and positive-phase sequence q-axis voltage <Vq1> from voltages VSu, VSv, and VSw through the positive-phase sequence dq converting block 305 and moving average calculator 402. The negative-phase sequence current ready feed-forward calculator 701 also obtains positive-phase sequence voltage root-mean-square value V1 and positive-phase sequence voltage phase angle $\phi 1$ from the sizes and amplitudes of vectors [<Vd1>, <Vq1>] through the orthogonal coordinate-polar coordinate converting block 403.

The negative-phase sequence current ready feed-forward calculator 701 obtains negative-phase sequence d-axis voltage <Vd2> and negative-phase sequence q-axis voltage <Vq2> from voltages VSu, VSv, and VSw through the negative-phase sequence dq converting block 401 and moving average calculator 402. The negative-phase sequence current ready feed-forward calculator 701 also obtains positive-phase sequence voltage root-mean-square value V2 and positive-phase sequence voltage phase angle $\phi 2$ from the sizes and amplitudes of vectors [<Vd2>, <Vq2>] through the orthogonal coordinate-polar coordinate converting block 403.

The inventors found that even when Iu, Iv, and Iw include negative-phase sequence components, active electric power that flows into each cluster and active electric power output from the cluster can be made zero by superimposing the zero-phase feed-forward term V0FF*, which includes root-mean-square value V0 and phase angle $\phi 0$ represented by the equations below, on cluster voltage command values Vu*, Vv*, and Vw*.

{Eq. 8}

$$V0 = -(V1 \times I2 \times \cos(\phi 1 - \delta 2) + V2 \times I1 \times \cos(\phi 2 - \delta 1))/(I1 \times \cos(\phi 0 - \delta 1) + I2 \times \cos(\phi 0 - \delta 2))$$

{Eq. 9}

$$\phi 0 = \tan^{-1}((V1 \times I2 \times (I1 \times \sin(\phi 1 + \delta 1 - \delta 2) + I2 \times \sin(\phi 1 - 2 \times \delta 2)) - V2 \times I1 \times (I2 \times \sin(\phi 2 - \delta 2 + \delta 1) + I1 \times \sin(\phi 2 - 2 \times \delta 1)))/(V1 \times I2 \times (I1 \times \cos(\phi 1 + \delta 1 - \delta 2) - I2 \times \cos(\phi 1 - 2 \times \delta 2)) - V2 \times I1 \times (I2 \times \cos(\phi 2 - \delta 2 + \delta 1) - I1 \times \cos(\phi 2 - 2 \times \delta 1))))$$

When the zero-phase feed-forward term V0FF* having root-mean-square value V0 and phase angle $\phi 0$, which are obtained from a phasor calculator 702 calculating the above equations, is superimposed on cluster voltage command values Vu*, Vv*, and Vw*, a phase difference between Vu and Iu, a phase difference between Vv and Iv, and a phase difference between Vw and Iw all become approximately 90 degrees. That is, active electric power that flows into each cluster and active electric power output from the cluster become 0, suppressing the DC voltages from being unbalanced.

With the power converter 102 in this embodiment, the clusters 104 to 106 are connected to the power supply system 101 through their respective reactors 103.

The present invention can also be applied to a case in which the clusters 104 to 106 are each connected to the power supply system 101 through a transform instead of the reactor 103.

The present invention can also be applied to a case in which the clusters 104 to 106 are each connected to the power supply system 101 through both the reactor 103 and a transform.

{Embodiment 3}

A third embodiment of the present invention will be described below.

The third embodiment is characterized in that the power converter 102 allows the negative-phase sequence currents to flow while an instantaneous voltage drop is present in the power supply system 101.

In the third embodiment, the DC capacitor in each unit cell is made compact when compared with the CMC-STATCOM in the prior art, as in the first embodiment.

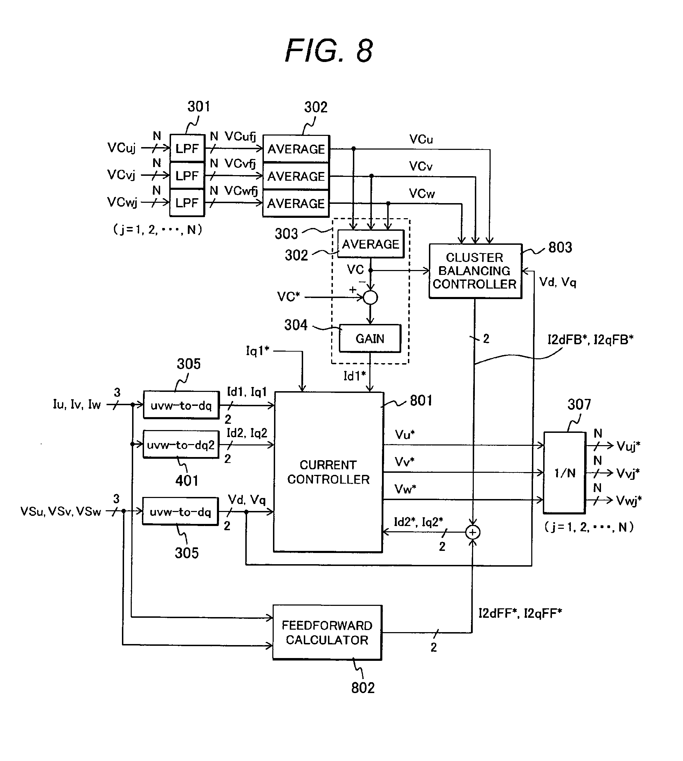

Differences between the third embodiment and the first embodiment are represented in the control block diagrams shown in FIGs. 8 to 10. Control in the third embodiment will be described below with reference to FIGs. 8 to 10.

The control block in FIG. 8 represents calculation, which is not shown in FIG. 1, in the controller.

FIG. 8 in the third embodiment differs from FIG. 3 in the first embodiment in that in FIG. 8, a negative-phase sequence current output-type current controller 801, a negative-phase sequence current output-type feed-forward calculator 802, and a negative-phase sequence current output-type cluster balancing controller 803, which differ from FIG. 1, are provided besides the negative-phase sequence dq converting block 401. Differences between FIG. 8 and FIG. 3 will be described below.

The negative-phase sequence dq converting block 401 performs dq conversion on currents Iu, Iv, and Iw to obtain Id2 and Iq2. The obtained Id2 and Iq2 are given to the negative-phase sequence current output-type current controller 801.

The negative-phase sequence current output-type current controller 801 gives cluster voltage command values Vu*, Vv*, and Vw* so that actual currents Id1, Iq1, Id2, and Iq2 match their command values Id1*, Iq1*, Id2*, and Iq2*. The obtained Vu*, Vv*, and Vw* are given to the voltage command value divider 307.

The negative-phase sequence current output-type feed-forward calculator 802 calculates negative-phase sequence current command value feed-forward terms Id2FF* and Iq2FF* from currents Iu, Iv, and Iw and power supply system voltages VSu, VSv, and VSw. The internal structure of the negative-phase sequence current output-type feed-forward calculator 802 will be described later.

The negative-phase sequence current output-type cluster balancing controller 803 calculates negative-phase sequence current command value feedback terms Id2FB* and Iq2FB* from cluster average DC voltages VCu, VCv, and VCw, total average DC voltage VC, and d-axis components Vd and q-axis component Vq of the power supply system voltage. The internal structure of the negative-phase sequence current output-type cluster balancing controller 803 will be described later.

Negative-phase sequence d-axis current command value Id2*, which is the sum of Id2FF* and Id2FB*, and negative-phase sequence q-axis current command value Iq2*, which is the sum of Iq2FF* and Iq2FB*, are given to the negative-phase sequence current output-type current controller 801.

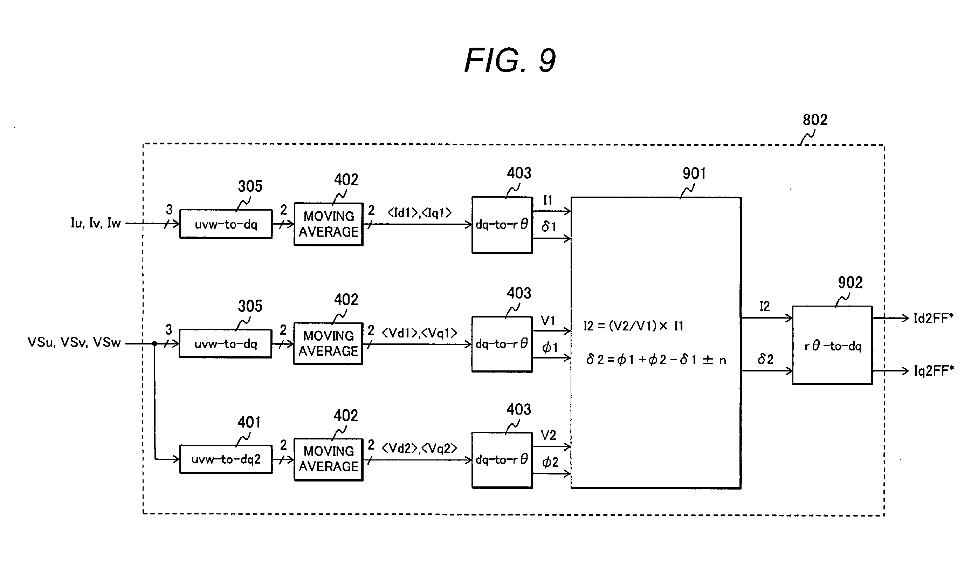

The internal structure of the negative-phase sequence current output-type feed-forward calculator 802 will be described with reference to FIG. 9.

The negative-phase sequence current output-type feed-forward calculator 802 uses the positive-phase sequence dq converting block 305 to perform positive-phase sequence dq conversion on currents Iu, Iv, and Iw that flow into the reactors 103, and calculates a moving average through the moving average calculator 402, in which a half cycle of the power supply system is handled as a time window, obtaining positive-phase sequence d-axis current <Id> and positive-phase sequence q-axis current <Iq>. The negative-phase sequence current output-type feed-forward calculator 802 also obtains positive-phase sequence current root-mean-square value I1 and positive-phase sequence current phase angle δ1 from the sizes and amplitudes of vectors [<Id>, <Iq>] through the orthogonal coordinate-polar coordinate converting block 403.

The negative-phase sequence current output-type feed-forward calculator 802 also uses the positive-phase sequence dq converting block 305 to perform positive-phase sequence dq conversion on phase voltages VSu, VSv, and VSw of the power supply system 101, and calculates a moving average through the moving average calculator 402, in which a half cycle of the power supply system is handled as a time window, obtaining negative-phase sequence d-axis voltage <Vd1> and negative-phase sequence q-axis current <Vq1>. The negative-phase sequence current output-type feed-forward calculator 802 also obtains negative-phase sequence voltage root-mean-square value V1 and negative-phase sequence voltage phase angle φ1 from the sizes and amplitudes of vectors [<Vd1>, <Vq1>] through the orthogonal coordinate-polar coordinate converting block 403.

The negative-phase sequence current output-type feed-forward calculator 309 also uses the negative-phase sequence dq converting block 401 to perform negative-phase sequence dq conversion on phase voltages VSu, VSv, and VSw of the power supply system 101, and calculates a moving average through the moving average calculator 402, in which a half cycle of the power supply system is handled as a time window, obtaining negative-phase sequence d-axis voltage <Vd2> and negative-phase sequence q-axis current <Vq2>. The negative-phase sequence current output-type feed-forward calculator 802 also obtains negative-phase sequence voltage root-mean-square value V2 and negative-phase sequence voltage phase angle $\phi2$ from the sizes and amplitudes of vectors [<Vd2>, <Vq2>] through the orthogonal coordinate-polar coordinate converting block 403.

A phasor calculator 901 calculates negative-phase sequence current root-mean-square value I2 and negative-phase sequence current phase angle $\delta2$, which are represented by the equations below, by using I1, $\delta1$, V1, $\phi1$, V2, and $\phi2$.

$$\{Eq. \ 10\}$$

$$I2 \ = \ (V2/V1) \ \times \ I1$$

$$\{Eq. \ 11\}$$

$$\delta2 \ = \ \phi1 \ + \ \phi2 \ - \ \delta1 \ + \ \pi$$

The phasor calculator 901 calculates the negative-phase sequence current command value feed-forward terms Id2FF* and Iq2FF* from obtained I2 and $\delta2$ through a polar coordinate-orthogonal coordinate converting block 902.

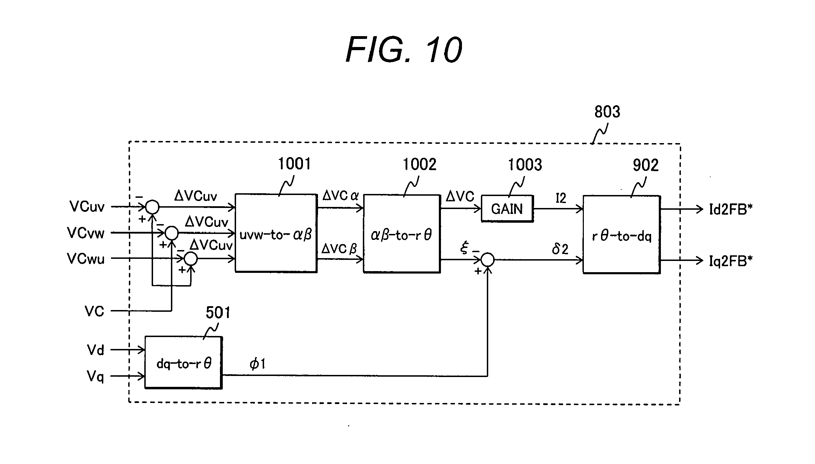

The internal structure of the negative-phase sequence current output-type cluster balancing controller 803 will be described with reference to FIG. 10.

The negative-phase sequence current output-type cluster balancing controller 803 calculates $\Delta$VCu, $\Delta$VCv, and $\Delta$VCw, which are respectively differences between given total average DC voltage VC and cluster average DC voltages VCu, VCv and VCw. The negative-phase sequence current output-type cluster balancing controller 803 then performs $\alpha\beta$ conversion on the obtained $\Delta$VCu, $\Delta$VCv, and $\Delta$VCw by using an $\alpha\beta$ converting block 1001 and obtains [$\Delta$VC$\alpha$, $\Delta$VC$\beta$] as vectors on an $\alpha\beta$ axis. The negative-phase sequence current output-type cluster balancing controller 803 further calculates the sizes $\Delta$VC and amplitude $\xi$ of vectors [$\Delta$VC$\alpha$, $\Delta$VC$\beta$] through an orthogonal coordinate-polar coordinate converting block 1002.

The negative-phase sequence current output-type cluster balancing controller 803 also calculates amplitude $\phi1$ of vectors [Vd, Vq], that is, the phase angle of the power supply system voltage, from vectors [Vd, Vq] of given positive-phase sequence d-axis voltage Vd and positive-phase sequence q-axis voltage Vq though an orthogonal coordinate-polar coordinate converting block 501.

The negative-phase sequence current output-type cluster balancing controller 803 calculates the negative-phase sequence current command value feedback terms Id2FB* and Iq2FB* from a root-mean-square value 10 obtained by multiplying $\Delta$VC by a cluster balancing control gain 1003 and phase angle $\delta0$ (= $\phi1$ - $\xi$) through the polar coordinate-orthogonal coordinate converting block 902.

When control is performed as described above, active electric power flows into the cluster having the lowest cluster average DC voltage and thereby the cluster average DC voltage rises. As a result, the cluster average DC voltages are balanced.

The mechanism in this embodiment will be described below.

When negative-phase sequence components controlled by the negative-phase sequence current output-type current controller 801 are superimposed on currents Iu, Iv, and Iw, a phase difference between Vu and Vv, a phase difference between Vv and Iv, and a phase difference between Vw and Iw all become approximately 90 degrees, starting immediately after the occurrence of an instantaneous voltage drop. That is, active electric power that flows into each cluster and active electric power output from the cluster become 0.

If the cluster average DC voltages become unbalanced, the negative-phase sequence current output-type cluster balancing controller 803 causes active electric power to flow into the cluster having the lowest cluster average DC voltage and thereby the cluster average DC voltage rises, as described above. As a result, it is assured that the cluster average DC voltages are balanced.

{Reference Sings List}

101 ... power supply system, 102 ... power converter, 103 ... reactor, 104 ... u-phase cluster, 105 ... v-phase cluster, 106 ... w-phase cluster, 107 ... unit cell, 201 ... x-phase upper element, 202 ... x-phase lower element, 203 ... y-phase upper element, 204 ... y-phase lower element, 205 ... DC capacitor, 301 ... low-pass filter (LPF), 302 ... average calculator, 303 ... total average DC voltage controller, 304 ... total average DC voltage control gain, 305 ... positive-phase sequence dq converting block, 306 ... current controller, 307 ... voltage command value divider, 308 ... cluster balancing controller, 309 ... feed-forward calculator, 401 ... negative-phase sequence dq converting block, 402 ... moving average calculator, 403, 1002 ... orthogonal coordinate-polar coordinate converting block, 404 ... sine wave generator, 701 ... negative-phase sequence current ready feed-forward calculator, 702, 901 ... phasor calculator, 801 ... negative-phase sequence current output-type current controller, 802 ... negative-phase sequence current output-type feed-forward calculator, 803 ... negative-phase sequence current output-type cluster balancing controller, 902 ... polar coordinate-orthogonal coordinate converting block, 1001 ... $\alpha\beta$ converting block, 1003 ... cluster balancing control gain.

**Claims**

1. A power converter that has a star-connected cascade multi-level converter (CMC) linked to a power supply system, the CMC being formed by star-connecting serial bodies, each of which is formed with a reactor and a cluster, the cluster being a serial body formed with one or a plurality of unit cells, wherein a potential at a point at which three serial bodies, each having the reactor and the cluster, are star-connected is controlled so that the potential varies at the same amplitude as an amplitude of a negative-phase sequence voltage of the power supply system.

2. The power converter according to Claim 1, wherein when the power supply system causes an instantaneous voltage drop, an amplitude by which the potential at the point at which the three serial bodies are star-connected varies is made substantially constant from a half cycle after occurrence of the instantaneous voltage drop until the instantaneous voltage drop ends.

3. The power converter according to Claim 1 or 2, wherein when the power supply system causes an instantaneous voltage drop while the power converter is outputting a negative-phase sequence current, an amplitude by which the potential at the point at which the three serial bodies are star-connected varies is made substantially constant from a half cycle after the occurrence of the instantaneous voltage drop until the instantaneous voltage drop ends.

4. The power converter according to Claim 1 or 2, wherein if a root-mean-square value and a phase angle of a negative-phase sequence component included in a voltage of the power supply system are respectively denoted V2 and $\phi$2 and a root-mean-square value and a phase angle of a positive-phase sequence component of a current that flows into the reactor are respectively denoted I1 and $\delta$1 a zero-phase voltage having root-mean-square value V0, substantially represented by {Eq. 1}, and a phase angle $\phi$0, substantially represented by {Eq. 2}, is added to an output voltage command value to be supplied to each cluster.

$$\{Eq.\ 1\}$$

$$V0 = V2$$

$$\{Eq.\ 2\}$$

$$\phi 0 = 2 \times \delta 1 - \phi 2 \pm \pi$$

5. The power converter according to Claim 1, 2, or 4, wherein moving average calculation in which a half cycle of a frequency of the power supply system or an integer multiple of the half cycle is handled as a time window is used in detection of root-mean-square value V2 and phase angle $\phi$2 of the negative-phase sequence component included in the voltage of the power supply system and in detection of phase angle $\delta$1 of a positive-phase sequence current of the reactor.

6. The power converter according to Claim 1, 2, or 4, wherein if a root-mean-square value and a phase angle of a positive-phase sequence component included in the voltage of the power supply system are respectively denoted V1 and $\phi$1, the root-mean-square value and the phase angle of the negative-phase sequence component included in the voltage of the power supply system are respectively denoted V2 and $\phi$2, the root-mean-square value and the phase angle of the positive-phase sequence component of the current that flows into the reactor are respectively denoted I1 and $\delta$1 and a root-mean-square value and a phase angle of a negative-phase sequence component of the current that flows into the reactor are respectively denoted I2 and $\delta$2, a zero-phase voltage having root-mean-square value V0, substantially represented by {Eq. 3}, and phase angle $\phi$0, substantially represented by {Eq. 4}, is added to an output voltage command value to be supplied to each cluster.

```
{Eq. 3}

V0 = -(V1 × I2 × cos(φ1 - δ2) + V2 × I1 × cos(φ2 -



       δ1))/(I1 × cos(φ0 - δ1) + I2 × cos(φ0 - δ2))


   {Eq. 4}

φ0 = tan⁻¹ ((V1 × I2 × (I1 × sin(φ1 + δ1 - δ2) + I2 ×

sin(φ1 - 2 × δ2)) - V2 × I1 × (I2 × sin(φ2 - δ2 + δ1) +

I1 × sin(φ2 - 2 × δ1)))/(V1 × I2 × (I1 × cos(φ1 + δ1 -

δ2) - I2 × cos(φ1 - 2 × δ2)) - V2 × I1 × (I2 × cos(φ2 -

δ2 + δ1) - I1 × cos(φ2 - 2 × δ1)))))
```

7. The power converter according to Claim 1, 2, or 6, wherein moving average calculation in which a half cycle of a frequency of the power supply system or an integer multiple of the half cycle is handled as a time window is used in detection of root-mean-square value V1 and phase angle $\phi$1 of the positive-phase sequence component included in the voltage of the power supply system, in detection of root-mean-square value V2 and phase angle $\phi$2 of the negative-phase sequence component included in the voltage of the power supply system, in detection of root-mean-square value I1 and phase angle $\delta$1 of the positive-phase sequence component of the current that flows into the reactor, and in detection of root-mean-square value I2 and phase angle $\delta$2 of the negative-phase sequence component of the current that flows into the reactor.

8. A power converter that has a star-connected cascade multi-level converter (CMC) linked to a power supply system, the CMC being formed by star-connecting serial bodies, each of which is formed with a reactor and a cluster, the cluster being a serial body formed with one or a plurality of unit cells, wherein a negative-phase sequence component of a current that flows into a serial body formed with the cluster and the reactor is controlled so that the negative-phase sequence component varies at the same amplitude as an amplitude of a negative-phase sequence voltage included in the power supply system.

9. The power converter according to Claim 8, wherein when the power supply system causes an instantaneous voltage drop, an amplitude by which the negative-phase sequence component of the current that flows into the serial body formed with the cluster and the reactor varies is made substantially constant from a half cycle after occurrence of the instantaneous voltage drop until the instantaneous voltage drop ends.

10. The power converter according to Claim 8 or 9, wherein if a root-mean-square value and a phase angle of a positive-phase sequence component included in the voltage of the power supply system are respectively denoted V1 and $\phi$1, a root-mean-square value and a phase angle of a negative-phase sequence component included in the voltage of the power supply system are respectively denoted V2 and $\phi$2, and a root-mean-square value and a phase angle of a positive-phase sequence component of a current that flows into the reactor are respectively denoted I1 and $\delta$1 a negative-phase sequence current having root-mean-square value I0, substantially represented by {Eq. 5}, and a

phase angle $\delta 2$, substantially represented by {Eq. 6}, is controlled so that the negative-phase sequence current flows into the serial body formed with the cluster and the reactor.

{Eq. 5]

$$I2 = (V2/V1) \times I1$$

{Eq. 6}

$$\delta 2 = \phi 1 + \phi 2 - \delta 1 \pm \pi$$

11. The power converter according to any one of Claims 8 to 10, wherein a cluster-specific average of voltages across DC capacitors in one or more unit cells included in one cluster is calculated for each cluster and control is performed so that a negative-phase sequence current by which electric power flows into a cluster in which the cluster-specific average is smallest flows into each cluster.

12. The power converter according to any one of Claims 8 to 10, wherein moving average calculation in which a half cycle of a frequency of the power supply system or an integer multiple of the half cycle is handled as a time window is used in detection of root-mean-square value V1 and phase angle $\phi 1$ of the positive-phase sequence component included in the voltage of the power supply system, in detection of root-mean-square value V2 and phase angle $\phi 2$ of the negative-phase sequence component, and in detection of phase angle $\delta 1$ of the positive-phase sequence current of the reactor.

13. The power converter according to any one of Claims 1 to 12, wherein the unit cell is a single-phase full bridge.

14. The power converter according to any one of Claims 1 to 12, wherein a transformer is connected instead of the reactor.

15. The power converter according to any one of Claims 1 to 12, wherein a transformer is connected in series with the reactor.

EP 2 560 275 A1

# FIG. 1

# FIG. 2

# FIG. 3

# FIG. 4

NOTE:
"cos ωt" IS SYNCHRONIZED TO THE POSITIVE-SEQUENCE u-PHASE UTILITY VOLTAGE.

Inputs: Iu, Iv, Iw → [305 uvw-to-dq] →2→ [402 MOVING AVERAGE] →2 $\langle Id \rangle$, $\langle Iq \rangle$→ [403 dq-to-r θ] → I1, δ1 → [2]

Inputs: VSu, VSv, VSw → [401 uvw-to-dq2] →2→ [402 MOVING AVERAGE] →2 $\langle Vd2 \rangle$, $\langle Vq2 \rangle$→ [403 dq-to-r θ] → V2, φ2 → [-1] → V0, φ0

[404] $\sqrt{2} \times V0 \times \cos(\omega t + \phi 0)$ → VOFF*

309

# FIG. 5

# FIG. 6

FIG. 7

$$V0 = -\frac{V1 \times I2 \times \cos(\phi1 - \delta2) + V2 \times I1 \times \cos(\phi2 - \delta1)}{I1 \times \cos(\phi0 - \delta1) + I2 \times \cos(\phi0 - \delta2)}$$

$$\phi0 = \tan^{-1}\frac{V1 \times I2\,(I1 \times \sin(\phi1 + \delta1 - \delta2) + I2 \times \sin(\phi1 - 2 \times \delta2)) - V2 \times I1 \times (I2 \times \sin(\phi2 + \delta2 - \delta1) + I1\,\sin(\phi2 - 2 \times \delta1))}{V1 \times I2\,(I1 \times \cos(\phi1 + \delta1 - \delta2) - I2 \times \cos(\phi1 - 2 \times \delta2)) - V2 \times I1 \times (I2 \times \cos(\phi2 + \delta2 - \delta1) - I1\,\cos(\phi2 - 2 \times \delta1))}$$

EP 2 560 275 A1

# FIG. 8

# FIG. 9

802

305
uvw-to-dq

402
MOVING AVERAGE

403
dq-to-rθ

Iu, Iv, Iw → 3 → uvw-to-dq → 2 → MOVING AVERAGE → 2 ⟨Id1⟩,⟨Iq1⟩ → dq-to-rθ

I1
δ1

305
uvw-to-dq

402
MOVING AVERAGE

403
dq-to-rθ

VSu, VSv, VSw → 3 → uvw-to-dq → 2 → MOVING AVERAGE → 2 ⟨Vd1⟩,⟨Vq1⟩ → dq-to-rθ

V1
φ1

401
uvw-to-dq2

402
MOVING AVERAGE

403
dq-to-rθ

uvw-to-dq2 → 2 → MOVING AVERAGE → 2 ⟨Vd2⟩,⟨Vq2⟩ → dq-to-rθ

V2
φ2

901

$$I2 = (V2/V1) \times I1$$

$$\delta 2 = \phi 1 + \phi 2 - \delta 1 \pm n$$

I2
δ2

902
rθ-to-dq

→ Id2FF*
→ Iq2FF*

22

# FIG. 10

EP 2 560 275 A1

**INTERNATIONAL SEARCH REPORT**

| International application No. |
| --- |
| PCT/JP2011/058566 |

A. CLASSIFICATION OF SUBJECT MATTER
*H02M7/483*(2007.01)i, *H02M7/48*(2007.01)i

According to International Patent Classification (IPC) or to both national classification and IPC

B. FIELDS SEARCHED

Minimum documentation searched (classification system followed by classification symbols)
H02M7/483, H02M7/48

Documentation searched other than minimum documentation to the extent that such documents are included in the fields searched
Jitsuyo Shinan Koho          1922–1996   Jitsuyo Shinan Toroku Koho   1996–2011
Kokai Jitsuyo Shinan Koho    1971–2011   Toroku Jitsuyo Shinan Koho   1994–2011

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2009-165269 A (Mitsubishi Heavy Industries, Ltd.), 23 July 2009 (23.07.2009), entire text (Family: none) | 1-15 |
| A | JP 2009-153297 A (Toshiba Corp.), 09 July 2009 (09.07.2009), entire text (Family: none) | 1-15 |
| A | JP 2008-228494 A (The Kansai Electric Power Co., Inc.), 25 September 2008 (25.09.2008), entire text (Family: none) | 1-15 |

☐ Further documents are listed in the continuation of Box C.      ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| 01 July, 2011 (01.07.11) | 12 July, 2011 (12.07.11) |

| Name and mailing address of the ISA/ Japanese Patent Office | Authorized officer |
| --- | --- |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **YOSHII ; INOUE ; AKAGI.** Transuresu kasukedo PWM STATCOM no chokuryudenatsuseigyoho no kento (Zero-sequence voltage control of a cascade PWM converter with star-configuration. *IEE-SPC and IEE-IEA materials, SPC-07-115/IEA-07-38,* 32-36